# EUROPÄISCHE PATENTSCHRIFT

(11) **EP 2 631 584 B1**
(45) Veröffentlichungstag und Bekanntmachung des Hinweises auf die Patenterteilung: **09.04.2014**
(21) Anmeldenummer: 12156543.6
(22) Anmeldetag: 22.02.2012
(51) Int. Cl.: F28D 1/047, F28F 13/00, F28F 21/02, F24D 3/16, F24D 19/02

(54) **Heizkörper**
Heater
Radiateur

(43) Veröffentlichungstag der Anmeldung: 28.08.2013
(73) Patentinhaber: Zehnder Verkaufs- und Verwaltungs AG, 5722 Gränichen (CH)
(72) Erfinder: Juda, Tomasz, 59-700 Boleslawiec (PL); Sitek, Henry, 53-031 Wroclaw (PL)
(74) Vertreter: Stenger, Watzke & Ring

(56) Entgegenhaltungen:
- EP-A1- 2 339 284
- WO-A1-2011/045086
- WO-A1-2011/080338
- WO-A2-2010/103385
- DE-U1- 9 302 743
- DE-U1- 9 304 901
- DE-U1-202008 006 172
- DE-U1-202009 011 784

## Beschreibung

Die Erfindung betrifft einen Heizkörper für die Beheizung von Räumen oder Teilen hiervon, mit einem eine wabenförmige Struktur aufweisenden Grundkörper, der außenseitig zwei Großflächen bereitstellt, die jeweils mit einer Abdeckung versehen sind, mit einem in die wabenförmige Struktur des Grundkörpers eingebetteten und diese durchdringenden Rohrregister sowie mit einer Anschlusseinrichtung, die eine Hydraulikeinheit für einen Anschluss des Rohrregisters an einen Heizmediumvorlauf und/oder -rücklauf sowie eine Halteeinheit für eine Wandbefestigung aufweist.

Heizkörper für die Beheizung von Räumen oder Teilen hiervon sind in vielfältiger Ausgestaltung aus dem Stand der Technik an sich bekannt. Gattungsgemäße Heizkörper sind beispielsweise aus der DE 93 02 743 U1 und der WO 2011/045086 A1 bekannt geworden.

Die DE 93 02 743 U1 betrifft ein plattenförmiges Wärmestrahlungselement. Dieses verfügt über einen Kern aus einem Wabenkörper, beispielsweise einem Wabenblech aus Aluminium. Dieser Kern ist beidseitig mit einer glasfaserverstärkten Reaktionsharzbeschichtung ausgerüstet. Im Kern sind Heizwasser-Heizungsrohre, die beispielsweise aus Kupfer gebildet sind, angeordnet. Zu diesem Zweck verfügt der Kern über entsprechende Kanäle, in welche die Heizungsrohre beispielsweise mittels Polyesterharz eingeklebt sind.

Die WO 2011/045086 A1 betrifft eine Energiewandlervorrichtung zur Verwendung als Sonnenkollektor oder als Heizkörper, wobei ein Basiskörper vorgesehen ist, der in einer speziellen Variante z. B. eine Wabenstruktur aufweist. Der Basiskörper ist vorzugsweise aus einem keramischen Material gebildet und stellt kanälchenförmige Löcher zur Verfügung, die ausgehend von der Vorderseite des Basiskörpers zu dessen Rückseite durchgehend ausgebildet sind. Eine Leitungsschlange für die Durchführung eines Wärmeträgermediums durchsetzt den Basiskörper, und zwar quer zu den Längsachsen der durchgängigen Löcher, wobei Leitungsdurchführungskanäle im Basiskörper vorgesehen sind. Vorzugsweise ist der Basiskörper vermittels kleiner Abstandshalter aus formstabilem, transluszentem Polymermaterial zwischen zwei inneren Glasscheiben eingefasst.

Es liegt im ständigen Bestreben, neuartige Heizkörperkonstruktionen vorzuschlagen, die eine vereinfachte Handhabung und/oder eine vereinfachte Herstellung und/oder eine vereinfachte Montage ermöglichen. Es ist deshalb die **Aufgabe** der Erfindung, einen neuartigen Heizkörper vorzuschlagen, der gegenüber dem Stand der Technik eine Verbesserung insbesondere in der Handhabung, Fertigung und/oder Montage erbringt.

Zur **Lösung** dieser Aufgabe wird mit der Erfindung vorgeschlagen ein Heizkörper der gattungsgemäßen Art, der sich dadurch auszeichnet, dass die von der wabenförmigen Struktur des Grundkörpers bereitgestellten Hohlräume zumindest teilweise mit expandiertem Graphit ausgefüllt sind und dass die Halteeinheit zwei relative zueinander verschwenkbare Abschnitte aufweist, wobei die Anschlusseinrichtung ein Gehäuse aufweist und der eine der beiden Abschnitte der Halteeinheit durch das Gehäuse gebildet ist. Der Heizkörper nach der Erfindung verfügt über einen Grundkörper. Dieser Grundkörper ist in seinen geometrischen Abmessungen beispielsweise nach Art eines Quaders ausgebildet, wobei er zwei Großflächen aufweist und in Dickenrichtung vergleichsweise schmal ausgebildet ist. Der Grundkörper verfügt über eine wabenförmige Struktur. In diese ist ein Rohrregister eingebettet, das die Struktur durchdringt. Die außenseitigen Großflächen des Grundkörpers sind jeweils mit einer Abdeckung versehen.

Der vorbeschriebene konstruktive Aufbau des erfindungsgemäßen Heizkörpers zeichnet sich durch seine hohe Steifigkeit bei gleichzeitig geringem Gewicht aus. Dies wird durch die wabenförmig ausgebildete Struktur des Grundkörpers in Kombination mit den auf den Großflächen des Grundkörpers angebrachten Abdeckungen erreicht.

Im bestimmungsgemäßen Verwendungsfall erfolgt ein Wärmetransfer vom Heizkörper auf die ihn umgebende Luft über die Großflächen des Grundkörpers bzw. über die von den Großflächen des Grundkörpers getragenen Abdeckungen. Insofern gestattet es die erfindungsgemäße Konstruktion, einen verhältnismäßig schmal dimensionierten Heizkörper auszugestalten, und dies bei gleichzeitig hoher spezifischer Leistung. Der am Einbauort des Heizkörpers benötigte Installationsraum ist damit auf ein Minimum reduziert.

Aufgrund der wabenförmigen Struktur des Grundkörpers wird zudem ein im Vergleich zu herkömmlichen Heizkörpern verbesserter Wärmetransfer von dem durch das Rohrregister des Heizkörpers geführten Heizmedium auf den Grundkörper und damit schlussendlich auch an die den Heizkörper umgebende Luft erreicht. Bei einer gegenüber herkömmlichen Heizkörpern gleichbleibenden Heizleistung kann damit in vorteilhafter Weise ein in seinen geometrischen Abmessungen kleiner dimensioniertes Rohrregister zum Einsatz kommen, so dass die im bestimmungsgemäßen Verwendungsfall umlaufende Heizmediummenge mit dem Vorteil verringert werden kann, ein dynamisches Regelverhalten bei schnelleren Lastwechseln zu ermöglichen.

Von Vorteil der erfindungsgemäßen Ausgestaltung ist zudem, dass die Abmessungen des Heizkörpers dem Grunde nach frei formbar sind. Anstelle eines quaderförmig ausgebildeten Grundkörpers können auch andere geometrische Ausgestaltungen gewählt werden, beispielsweise kreis- oder ellipsenförmige Formen. Es können auch polygonale Ausgestaltungen gewählt werden. Insofern ermöglicht die erfindungsgemäße Konstruktion eine gegenüber dem Stand der Technik erweiterte Formgebungsmöglichkeit.

Die auf die Großflächen des Grundkörpers aufgebrachten Abdeckungen können hinsichtlich ihres Materials frei gewählt werden. Bevorzugt sind indes solche Materialien, die gut wärmeleitfähig sind, wie beispielsweise Metall. Es können aber insbesondere aus Gründen der Optik auch andere Materialien gewählt werden, wie beispielsweise Kunststoff oder auch natürliche Materialien, wie beispielsweise Stein oder Marmor. Die erfindungsgemäße Konstruktion gestattet insofern auch eine größere Freiheit hinsichtlich des Heizkörperdesigns.

Ein weiterer Vorteil der erfindungsgemäßen Konstruktion liegt in dem verringerten Energiebedarf bei der Herstellung. Dies deshalb, weil auf energieverbrauchende Fügeverfahren wie insbesondere das Schweißen dem Grunde nach verzichtet werden kann.

Die für eine Wandbefestigung sowie für einen hydraulischen Anschluss vorgesehene Anschlusseinrichtung kann in vorteilhafter Weise rückseitig des Heizkörpers ausgebildet sein, womit sie verdeckt ist.

Der Grundkörper kann, aus Metall bestehen. Bevorzugter Weise kommt ein Leichtmetall wie z.B. Aluminium zum Einsatz. Das Gesamtgewicht des Heizkörpers kann damit auf einem Minimum gehalten werden.

Es ist erfindungsgemäß vorgesehen, dass die von der wabenförmigen Struktur des Grundkörpers bereitgestellten Hohlräume zumindest teilweise mit einem thermodynamisch aktiven Material ausgefüllt sind, bei welchem Material es sich um expandiertes Graphit handelt. Auf diese Weise wird ein gesteigerter Wärmeübergang zwischen dem vom Rohrregister geführten Heizmedium einerseits und dem Grundkörper andererseits erreicht. Die im bestimmungsgemäßen Verwendungsfall auftretenden Wärmeverluste können so minimiert werden.

Die auf den Großflächen des Grundkörpers aufgebrachten Abdeckungen können aus einem dem Grunde nach beliebig gewählten Material bestehen. Es sind auch Materialkombinationen denkbar. Bevorzugt sind indes Abdeckungen, die aus Metall oder Kunststoff gebildet sind.

Die Abdeckungen können mit dem Grundkörper verklebt sein. Dies ist insbesondere aus fertigungstechnischen Gründen von Vorteil.

Die Anschlusseinrichtung verfügt erfindungsgemäß über ein Gehäuse. Die einzelnen Komponenten der Anschlusseinrichtung sind im endmontierten Zustand von diesem Gehäuse aufgenommen. Es liegt insofern eine gekapselte Ausgestaltung vor, die kompakt ausgebildet ist und in einfacher Weise durch gelegentliche Oberflächenreinigung sauber gehalten werden kann.

Die Anschlusseinrichtung verfügt über eine Halteeinheit. Diese Halteeinheit ist erfindungsgemäß derart ausgebildet, dass sie eine schwenkbare Lagerung des Heizkörpers gestattet. Die Halteeinheit verfügt zu diesem Zweck über zwei relativ zueinander verschwenkbare Abschnitte. Dabei ist der eine der beiden Abschnitte durch das Gehäuse der Anschlusseinrichtung gebildet sind. Dieses Gehäuse wird wandseitig montiert. Der andere Abschnitt der Halteeinheit ist als entsprechendes Gegenlager am Heizkörper ausgebildet, beispielsweise in Form eines Tragelementes. Dieses Tragelement ist am Gehäuse der Halteeinheit verschwenkbar angeordnet, so dass im zusammengesetzten Zustand der Halteeinheit ein Verschwenken des Heizkörpers relativ gegenüber der den Heizkörper tragenden Gebäudewand möglich ist. Diese verschwenkbare Lagerung des Heizkörpers ist insbesondere aus Montage- bzw. Demontagegründen von Vorteil, da bei verschwenktem Heizkörper ein vereinfachter Zugriff auf die Hydraulikeinheit der Anschlusseinrichtung möglich ist.

Die Hydraulikeinheit stellt Anschlussleitungen für einen Anschluss des Rohrregisters an eine Heizmediumvorlaufleitung einerseits und für einen Anschluss des Rohrregisters an eine Heizmediumrücklaufleitung andererseits bereit.

Das Rohrregister verfügt für das Heizmedium über einen Vorlaufanschluss einerseits und einen Rücklaufanschluss andererseits. Im bestimmungsgemäßen Verwendungsfall strömt über den Vorlaufanschluss Heizmedium in das Rohrregister ein, durchströmt selbiges und tritt aus diesem über den Rücklaufanschluss wieder aus. Am Einbauort stehen wandseitig eine Heizmediumvorlaufleitung sowie eine Heizmediumrücklaufleitung zur Verfügung. Dabei ist die Heizmediumvorlaufleitung mit dem Vorlaufanschluss des Rohrregisters und die Heizmediumrücklaufleitung mit dem Rücklaufanschluss des Rohrregisters zu verbinden. Zum Zwecke dieser Verbindung sind die von der Hydraulikeinheit bereitgestellten Anschlussleitungen vorgesehen. Diese dienen einer strömungstechnischen Kopplung des Rohrregisters mit den am Installationsort vorgesehenen Leitungen. Auf diese Anschlussleitungen bzw. die bauseits vorgegebene Vorlaufleitung und Rücklaufleitung ist bei verschwenktem Heizkörper in der schon vorbeschriebenen Weise ein vereinfachter Zugriff möglich, was die Montage bzw. Demontage des erfindungsgemäßen Heizkörpers erleichtert.

Darüber hinaus kann gemäß einem weiteren Merkmal der Erfindung vorgesehen sein, dass die von der Hydraulikeinheit bereitgestellten Anschlussleitungen flexible Schlauchleitungen sind. Auch hierdurch wird die Montage bzw. Demontage vereinfacht. Darüber hinaus gestatten flexible Schlauchleitungen auch eine in der Positionierung flexiblere Wandbefestigung des Heizkörpers.

Der vorbeschriebene Heizkörper nach der Erfindung dient bevorzugter Weise dem Beheizen von Räumen oder Teilen hiervon. Es ist natürlich auch eine in thermodynamischer Hinsicht umgekehrte Verwendung möglich, d.h. nicht als Heizkörper, sondern als Kühlkörper. In diesem Fall dient das vom Grundkörper aufgenommene Rohrregister der Hindurchführung eines Kühlmediums. An den erfindungsgemäßen Aufbau und der erfindungsgemäßen Konstruktion ändert sich in einem solchen Verwendungsfall aber nichts.

Weitere Merkmale und Vorteile der Erfindung ergeben sich aus der nachfolgenden Beschreibung anhand der Figuren. Dabei zeigen:
- Fig. 1: in einer schematischen und teilgeschnittenen Draufsicht von vorn einen erfindungsgemäßen Heizkörper in einer ersten Ausführungsform;
- Fig. 2: den Heizkörper nach Fig. 1 in Blickrichtung II nach Fig. 1;
- Fig. 3: in einer schematischen Ansicht von unten den Heizkörper nach Fig. 1 gemäß Blickrichtung III nach Fig. 1;
- Fig. 4: in einer Ausschnittsdarstellung den Heizkörper nach Fig. 1 gemäß Ausschnitt IV nach Fig. 3;
- Fig. 5: in einer Ausschnittsdarstellung den Heizkörper nach Fig. 1 gemäß Ausschnitt V nach Fig. 2;
- Fig. 6: in einer schematisch perspektivischen Rückansicht einen erfindungsgemäßen Heizkörper gemäß einer zweiten Ausführungsform;
- Fig. 7: in einer schematischen Frontansicht von vorn den Heizkörper nach Fig. 6;
- Fig. 8: in einer schematischen Seitenansicht den Heizkörper nach Fig. 6 gemäß Blickrichtung XIII nach Fig. 7;
- Fig. 9: in einer schematischen Draufsicht von oben den Heizkörper nach Fig. 6 gemäß Blickrichtung IX nach Fig. 8.

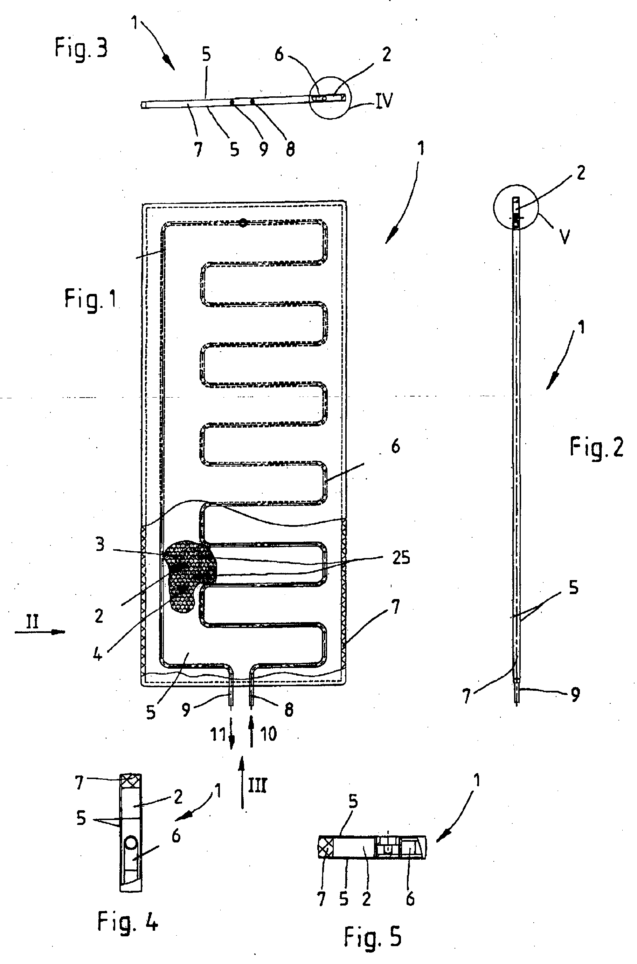

Der Heizkörper 1 nach der Erfindung verfügt über einen Grundkörper 2, der eine wabenförmige Struktur 3 aufweist und bevorzugter Weise aus Aluminium gebildet ist. Die wabenförmige Struktur 3 des Grundkörpers 2 ergibt sich insbesondere aus der Darstellung nach Fig. 1.

Der Grundkörper 2 stellt zwei Großflächen 4 bereit, von denen eine gemäß der Darstellung nach Fig. 1 zu erkennen ist. Die beiden Großflächen 4 sind jeweils mit einer Abdeckung 5 versehen, wie insbesondere die Darstellung nach Fig. 2 erkennen lässt. Bei der Abdeckung 5 kann es sich beispielsweise um ein Metallblech aus Aluminium handeln. Dabei sind die Abdeckungen 5 und der Grundkörper 2 bevorzugterweise flächenhaft miteinander verklebt.

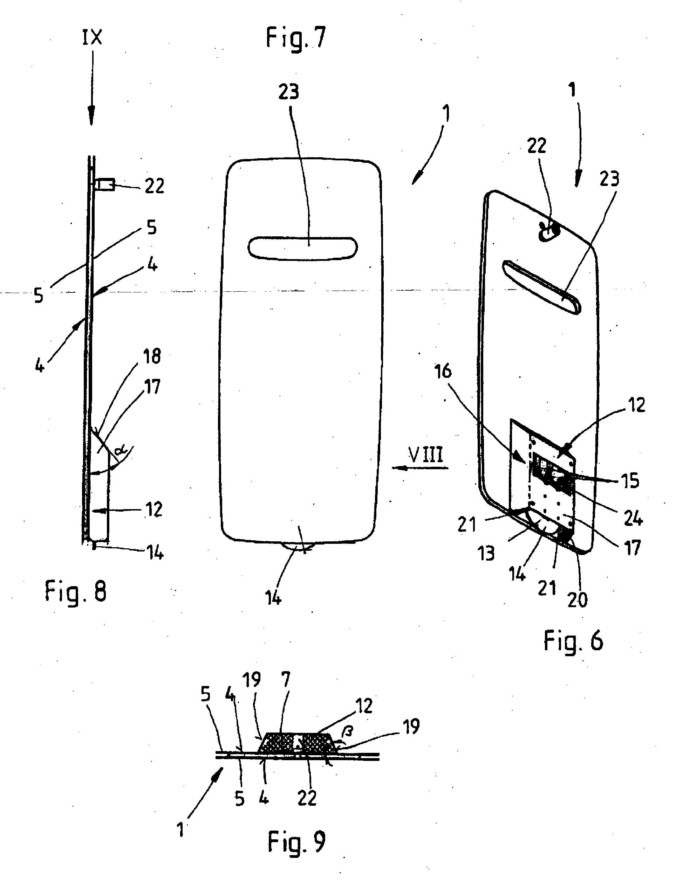

Gemäß der Ausführung des erfindungsgemäßen Heizkörpers nach den Figuren 1 bis 5 ist ein den Grundkörper 2 aufnehmender Rahmen 7 vorgesehen, der gleichfalls zwischen den beiden Abdeckungen 5 angeordnet ist und einen insgesamt umlaufenden bündigen Abschluss ausbildet. Die Ausführungsform nach den Figuren 6 bis 9 verfügt nicht über einen solchen Rahmen 7.

Der Heizkörper 1 verfügt desweiteren über ein Rohrregister 6, das im bestimmungsgemäßem Verwendungsfall der Hindurchführung eines Heizmediums beispielsweise in Form von Wasser dient. Das Rohrregister 6 ist in die wabenförmige Struktur 3 des Grundkörpers 2 eingebettet und durchdringt diese.

Gemäß der Erfindung sind die von der wabenförmigen Struktur 3 des Grundkörpers 2 bereitgestellten Hohlräume 25 zumindest teilweise mit expandiertem Graphit ausgefüllt. Durch die Ausfüllung der Hohlräume 25 mit einem thermodynamisch aktiven Material wird ein verbesserter Wärmeübergang von dem durch das Rohrregister hindurchgeführten Heizmedium auf den Grundkörper 2 erreicht.

Das Rohrregister 6 verfügt anschlussseitig über einen Vorlaufanschluss 8 sowie über einen Rücklaufanschluss 9. Im bestimmungsgemäßen Verwendungsfall strömt in entsprechen des Pfeils 10 Heizmedium über den Vorlaufanschluss 8 in das Rohrregister 6 ein, durchströmt dieses und verlässt es in Entsprechung des Pfeils 11 über den Rücklaufanschluss 9 wieder.

Der Heizkörper 1 verfügt des Weiteren über eine Anschlusseinrichtung 12. Diese ist der besseren Übersicht wegen nur anhand des Ausführungsbeispiels nach den Figuren 6 bis 9 dargestellt.

Die Anschlusseinrichtung 12 dient der Wandbefestigung des Heizkörpers 1. Zu diesem Zweck verfügt die Anschlusseinrichtung 12 über eine Halteeinheit 16. Diese ist ihrerseits in zwei Abschnitte unterteilt und verfügt über ein Gehäuse 17 einerseits und ein Tragelement 20 andererseits. Diese beiden Abschnitte, d.h. das Gehäuse 17 und das Tragelement 20 sind verschwenkbar miteinander verbunden. Dies ermöglicht im endmontierten Zustand eine Verschwenkung des Heizkörpers 1 relativ gegenüber der ihn tragenden Gebäudewand.

Im endmontierten Zustand ist das Gehäuse 17 der Halteeinheit 16 wandmontiert. Das Tragelement 20 ist heizkörperseitig ausgebildet. Das Gehäuse 17 nimmt das Tragelement 20 auf, wobei eine Verschwenkung des Tragelementes 20 relativ gegenüber dem Gehäuse 17 und damit eine Verschwenkung des Heizkörpers 1 relativ gegenüber dem Gehäuse 17 um die Schwenkachse 21 ermöglicht ist.

Die Anschlusseinrichtung 12 verfügt des Weiteren über eine Hydraulikeinheit 24. Diese dient der strömungstechnischen Verbindung des Vorlaufanschlusses 8 und des Rücklaufanschlusses 9 des Rohrregisters 6 mit in den Figuren nicht näher dargestellten, wandseitig vorgesehenen Heizmediumvorlauf- bzw. -rücklaufleitungen. Zu diesem Zweck verfügt die Hydraulikeinheit 24 über Anschlussleitungen 15, die bevorzugterweise als flexible Schlauchleitungen ausgebildet sind.

Zum Zwecke der verwenderseitigen Heiztemperatureinstellung verfügt die Anschlusseinrichtung 12 über ein Regelventil 13. Dieses ist mittels eines Bedienrades 14 einstellbar, das verwenderseitig von vorne des Heizkörpers 1 gut erreichbar ist, wie sich dies insbesondere aus der Darstellung nach Fig. 7 ergibt.

Das Gehäuse 17 der Anschlusseinrichtung 12, welches auch Teil der Halteeinheit 16 ist, verfügt oberseitig über eine Anschlussfläche 18, die unter einem Winkel α zur Großfläche 4 des Grundkörpers 2 ausgerichtet ist. Dieser Winkel α beträgt vorzugsweise 40° (Fig. 8).

Die Seitenflächen 19 des Gehäuses 17 stehen unter einem Winkel β von 65° zur Großfläche 4 des Grundkörpers 2, wie sich dies insbesondere aus der Darstellung nach Fig. 9 ergibt.

Durch die winklige Ausrichtung der Anschlussfläche 18 und der Seitenflächen 19 wird ein insgesamt kompakter Aufbau der gesamten Anschlusseinrichtung 12 erreicht. Zudem können etwaige Verschmutzungen wie z.B. Staubansammlungen leicht entfernt werden, was eine Reinigung des gesamten Heizkörpers 1 vereinfacht.

Zum Zwecke einer stabilisierten Fixierung des Heizkörpers 1 an einer Raumwand kann der Heizkörper 1 in seinem der Anschlusseinrichtung 12 gegenüberliegenden Endbereich mit einem Abstandshalter 22 ausgerüstet sein. Dieser ist im endmontierten Zustand bevorzugter Weise ebenfalls wandmontiert, so dass auch insoweit eine Wandfixierung des Heizkörpers 1 erreicht ist.

Die erfindungsgemäße Konstruktion erlaubt es, unterschiedliche geometrische Ausgestaltungen hinsichtlich des Heizkörpers 1 vorsehen zu können. So zeigt das Ausführungsbeispiel nach den Figuren 1 bis 5 eine rechteckförmige Ausgestaltung. Die Ausführungsform nach den Figuren 6 bis 9 ist eine dem Grunde nach auch rechteckförmige Ausgestaltung, verfügt aber im Unterschied zur Ausführungsform nach den Figuren 1 bis 5 über abgerundete Eckbereiche einerseits sowie über ballig ausgebildete seitliche Randkanten andererseits. Darüber hinaus verfügt die Ausführungsform nach den Figuren 6 bis 9 über eine Öffnung in Form eines Durchbruchs 23.

### Bezugszeichenliste

- 1: Heizkörper
- 2: Grundkörper
- 3: wabenförmige Struktur
- 4: Großfläche
- 5: Abdeckung
- 6: Rohrregister
- 7: Rahmen
- 8: Vorlaufanschluss
- 9: Rücklaufanschluss
- 10: Pfeil
- 11: Pfeil
- 12: Anschlusseinrichtung
- 13: Regelventil
- 14: Bedienrad
- 15: Anschlussleitung
- 16: Halteeinheit
- 17: Gehäuse
- 18: Anschlussfläche
- 19: Seitenfläche
- 20: Tragelement
- 21: Schwenkachse
- 22: Abstandshalter
- 23: Durchbruch
- 24: Hydraulikeinheit
- 25: Hohlraum

- α: Winkel
- β: Winkel

## Patentansprüche

1. Heizkörper für die Beheizung von Räumen oder Teilen hiervon, mit einem eine wabenförmige Struktur (3) aufweisenden Grundkörper (2), der außenseitig zwei Großflächen (4) bereitstellt, die jeweils mit einer Abdeckung (5) versehen sind, mit einem in die wabenförmige Struktur (3) des Grundkörpers (2) eingebetteten und diese durchdringenden Rohrregister (6) sowie mit einer Anschlusseinrichtung (12), die eine Hydraulikeinheit (24) für einen Anschluss des Rohrregisters (6) an einen Heizmediumvorlauf und/oder -rücklauf sowie eine Halteeinheit (16) für eine Wandbefestigung aufweist, **dadurch gekennzeichnet, dass** die von der wabenförmigen Struktur (3) des Grundkörpers (2) bereitgestellten Hohlräume (25) zumindest teilweise mit expandiertem Graphit ausgefüllt sind und dass die Halteeinheit (16) zwei relativ zueinander verschwenkbare Abschnitte aufweist, wobei die Anschlusseinrichtung (12) ein Gehäuse (17) aufweist und der eine der beiden Abschnitte der Halteeinheit (16) durch das Gehäuse (17) gebildet ist.

2. Heizkörper nach Anspruch 1 , **dadurch gekennzeichnet, dass** die Hydraulikeinheit (24) Anschlussleitungen (15) für einen Anschluss des Rohrregisters (6) an eine Heizmediumvorlaufleitung einerseits und für einen Anschluss des Rohrregisters an eine Heizmediumrücklaufleitung andererseits aufweist.

3. Heizkörper nach Anspruch 2, **dadurch gekennzeichnet, dass** die Anschlussleitungen (15) flexible Schlauchleitungen sind.

4. Heizkörper nach einem der vorhergehenden Ansprüche, **dadurch gekennzeichnet, dass** der Grundkörper (2) von einem zwischen den beiden Abdeckungen (5) angeordneten Rahmen (7) eingefasst ist.

5. Heizkörper nach Anspruch 1, **dadurch gekennzeichnet, dass** das Gehäuse (17) der Anschlusseinrichtung (12), welches auch Teil der Halteeinheit (16) ist, oberseitig über eine Anschlussfläche (18) verfügt, die unter einem Winkel α zur Großfläche (4) des Grundkörpers (2) ausgerichtet ist, wobei dieser Winkel α vorzugsweise 40° beträgt.

6. Heizkörper nach Anspruch 1, **dadurch gekennzeichnet, dass** die Seitenflächen (19) des Gehäuses (17) unter einem Winkel β von 65° zur Großfläche (4) des Grundkörpers (2) stehen.

## Claims

1. A radiator for heating rooms or parts thereof, comprising a base body (2) that has a honeycomb structure (3) and that provides two large surfaces (4) on the outer side, which large surfaces (4) are each provided with a cover (5), comprising a pipe register (6) which is embedded in the honeycomb structure (3) of the base body (2) and penetrates this one as well as comprising a connection device (12) which comprises a hydraulic unit (24) for connecting the pipe register (6) to a heating medium supply and/or return line as well as a holding unit (16) for wall mounting, **characterized in that** the cavities (25) provided by the honeycomb structure (3) of the base body (2) are at least partially filled up with expanded graphite and that the holding unit (16) comprises two sections which can be swiveled one to another, wherein the connection device (12) comprises a housing (17) and the one of the two sections of the holding unit (16) is formed by the housing (17).

2. A radiator according to claim 1, **characterized in that** the hydraulic unit (24) comprises connection pipes (15) for connecting the pipe register (6) to a heating medium supply line, on the one hand, and for connecting the pipe register to a heating medium return line, on the other hand.

3. A radiator according to claim 2, **characterized in that** the connection pipes (15) are flexible hose lines.

4. A radiator according to one of the preceding claims, **characterized in that** the base body (2) is surrounded by a frame (7) which is arranged between the two covers (5).

5. A radiator according to claim 1, **characterized in that** the housing (17) of the connection device (12), which is also part of the holding unit (16), comprises a connection surface (18) on the top side, which connection surface (18) is arranged under an angle α with respect to the large surface (4) of the base body (2), wherein this angle α is preferably 40°.

6. A radiator according to claim 1, **characterized in that** the lateral surfaces (19) of the housing (17) are arranged under an angle β of 65° with respect to the large surface (4) of the base body (2).

## Revendications

1. Radiateur pour chauffer des espaces ou des parties de ceux-ci, comprenant un corps de base (2) ayant une structure en nid d'abeille (3), le corps de base (2) fournissant deux grandes surfaces (4) du côté extérieur, lesquelles surfaces sont chacune munies d'un recouvrement (5), comprenant un registre de tubes (6) incorporé dans la structure en nid d'abeille (3) du corps de base (2) et traversant celle-ci ainsi que comprenant un dispositif de connexion (12) qui comprend une unité hydraulique (24) destinée au raccordement du registre de tubes (6) à un circuit aller et/ou un circuit retour du fluide chauffant ainsi qu'une unité de support (16) pour une fixation murale, **caractérisé en ce que** les cavités (25) fournies par la structure en nid d'abeille (3) du corps de base (2) sont au moins partiellement remplies de graphite expansé et que l'unité de support (16) comprend deux sections pivotant l'une par rapport à l'autre, le dispositif de connexion (12) comprenant un boîtier (17) et l'une des deux sections de l'unité de support (16) étant formée par le boîtier (17).

2. Radiateur selon la revendication 1, **caractérisé en ce que** l'unité hydraulique (24) comprend des conduits de raccordement (15) destinés au raccordement du registre de tubes (6) à un circuit aller du fluide chauffant, d'une part, et au raccordement du registre de tubes à un circuit de retour du fluide chauffant, d'autre part.

3. Radiateur selon la revendication 2, **caractérisé en ce que** les conduits de raccordement (15) sont des conduites en tuyaux flexibles.

4. Radiateur selon l'une des revendications précédentes, **caractérisé en ce que** le corps de base (2) est entouré par un cadre (7) disposé entre les deux recouvrements (5).

5. Radiateur selon la revendication 1, **caractérisé en ce que** le boîtier (17) du dispositif de connexion (12), qui fait aussi partie de l'unité de support (16), possède, du côté supérieur, une surface de connexion (18) qui est disposée sous un angle α par rapport à la grande surface (4) du corps de base (2), cet angle α étant de préférence de 40°.

6. Radiateur selon la revendication 1, **caractérisé en ce que** les surfaces latérales (19) du boîtier (17) sont disposées sous un angle β de 65° par rapport à la grande surface (4) du corps de base (2).
